# EUROPÄISCHE PATENTSCHRIFT

(11) **EP 2 877 029 B1**
(45) Veröffentlichungstag und Bekanntmachung des Hinweises auf die Patenterteilung: **22.11.2017**
(21) Anmeldenummer: 13762383.1
(22) Anmeldetag: 29.07.2013
(51) Int. Cl.: A21B 3/15, F24C 15/14, F24C 15/16

(54) **BACKBLECH MIT TROG**
BAKING TRAY COMPRISING A TROUGH
PLAQUE DE FOUR DOTÉE D'UNE DÉPRESSION

(30) Priorität: 27.07.2012 DE 102012014923; 12.04.2013 DE 102013006314
(43) Veröffentlichungstag der Anmeldung: 03.06.2015
(73) Patentinhaber: ACS Coating Systems GmbH, 26386 Wilhelmshaven (DE)
(72) Erfinder: STECHER, Christian, 26386 Wilhelmshaven (DE)
(74) Vertreter: Philipp, Matthias
(86) Internationale Anmeldenummer: PCT/DE2013/000430
(87) Internationale Veröffentlichungsnummer: WO 2014/015850

(56) Entgegenhaltungen:
- EP-A2- 2 051 014
- DE-U1- 9 217 899
- DE-U1- 29 905 157
- US-A- 2 287 309
- US-A- 5 453 574

## Beschreibung

Die Erfindung betrifft ein Backblech mit einem Auflagebereich und einem diesen allseitig umschließenden Rand.
Für Backvorgänge in Öfen sind derzeit unterschiedliche Behältnisse bekannt. Emaillierte Stahlbleche in Form von Kästen und Behältern haben den Nachteil, dass die Beschichtung leicht abplatzt und kein guter Antihafteffekt vorhanden ist. Herkömmliche Backbleche aus Aluminium, zumeist mit gekanteten und gebördelten Seiten, blank oder beschichtet, beispielsweise mit Teflon, haben den Nachteil, dass sie sich im Gebrauch deutlich durchbiegen und keinen sicheren Stand auf einer ebenen Unterlage haben. Bräter und Platten aus Aluminiumguss, auch mit teilweise gerillter Oberfläche oder mit offenen Strukturen als Grillplatte, sind zwar stabil und zum Teil mit unterschiedlichen Funktionen beidseitig verwendbar, sind aufgrund des relativ hohen Gewichts und der damit verbundenen Kosten bisweilen nachteilig.

Dokumente DE 29905157 U1, US 2287309 und EP2051014 stellen darüber hinaus einen für die Erfindung relevanten Stand der Technik dar. Bei Backblechen ist eine hohe Temperaturbeständigkeit, vorzugsweise bis mindestens 300°C, eine Grundvoraussetzung, wobei auch bei hohen Temperaturen unter Last keine nennenswerte Verformung eintreten darf.

Die Aufgabe der Erfindung besteht darin, die Anforderungen nach geringem Gewicht, geringen Verformungen auch bei höheren Temperaturen und geringer Anhaftneigung bei einem Brat- oder Backblech oder Grillblech zu erfüllen, und ein Bachblech bereitzustellen, das in beide Orientierungen genutzt werden kann, und zwar mit zwei unterschiedlichen Funktionalitäten. Diese Aufgabe wird bei einem gattungsgemäßen Backblech durch die Maßnahme gelöst, dass der Rand ein in Bezug auf eine Oberseite des Auflagebereichs nach unten verlaufendes trogförmiges Profil aufweist, mit einer ersten, unmittelbar an den Auflagebereich anschließenden, nach unten verlaufenden Trogwand, einem Trogboden und einer der ersten Trogwand gegenüberliegenden, nach oben verlaufenden zweiten Trogwand, wobei der Auflagebereich in Bezug auf die Oberseite nach oben konvex und nach unten konkav ist. Das Backblech ist aus einem metallischen Werkstoff gefertigt, etwa Stahl oder Leichtmetall (Aluminium oder Aluminiumlegierung). Auch ein Mehrschicht- oder Sandwichaufbau mehrerer unterschiedlicher metallischer Werkstoffe ist möglich, beispielsweise eine Kombination von Stahl und Kupfer, Stahl und Aluminium oder Aluminium und Kupfer.
Das Backblech ist zweckmäßigerweise als dünnes Blech in temperaturfester Ausführung hergestellt, etwa aus Edelstahl, Chromstahl oder aus ferritischem Stahl mit Nickel-Chrom- oder Aluminiumauflage, oder aus Aluminium oder einer Alulegierung.
Um das Gewicht von ca. 1,5 bis 2,5 mm dicken Aluminiumbackblechen nicht wesentlich zu überschreiten, kommt bei Stahlblech insbesondere eine Dicke im Bereich von ca. 0,5 mm bis 0,8 mm Dicke in Betracht. Im Vergleich zu Aluminium-Gussteilen können die Blechdicken bis auf 2 mm gesteigert werden, ohne dass ein Gewichtsnachteil besteht. Bei nicht geschlossenen Blechen sind auch noch größere Blechdicken ohne Gewichtsnachteil möglich. Obwohl die Ausführung auch dicker sein kann, beispielsweise bis 5 mm oder auch mehr, werden aus Preis- und Gewichtsüberlegungen eher geringere Dicken bevorzugt. Bei Al-Material oder Mehrschichtmaterialien kann eine Dicke von ca. 1,5 und 3 mm zweckmäßig sein.

Die Erfindung sieht zweckmäßigerweise vor, dass die zweite Trogwand mindestens bis in Höhe des Auflagebereichs verläuft, wobei sie in einer vorgegebenen Höhe oberhalb des Auflagebereichs enden kann. Es besteht die Möglichkeit, dass die zweite Trogwand in einen abgewinkelten Randabschnitt übergeht, der parallel zu dem Auflagebereich verlaufen kann.

Weiterhin besteht die Möglichkeit, dass die zweite Trogwand oder der Randabschnitt mit einer endseitigen Umbördelung versehen ist.

Dünne Bleche, die an sich hinsichtlich Preis und Gewicht vorteilhaft sind, besitzen keine ausreichende Biegesteifigkeit. Daher wird die Steifigkeit durch Abkanten der Seiten vergrößert, wobei scharfe Kanten einen größeren Effekt haben als rundere. Dazu kommt überraschend, dass die Biegesteifigkeit des Bodens oder Auflagebereichs nicht symmetrisch in beiden Richtungen gleich ist, sondern abhängig von der Richtung des Abkantens der Trogwände ein Gedächtnis an den Verformungsprozess erhalten zu bleiben scheint. Daher ist es vorteilhaft, dass die Trogwände in die entgegengesetzte Richtung wie bei bekannten Backblechen umgebogen oder abgekantet sind, also zunächst nach unten und nicht nach oben.

Damit erhält das Backblech eine Form, die eine umlaufende trogförmige Drainagerinne enthält, die in der bevorzugten Form bezüglich der Oberseite des Auflagebereichs nach oben offen ist. Dies bietet gegenüber bekannten Randgeometrien eine vergrößerte Biegesteifigkeit. Durch eine zusätzliche Hohlbiegung des Auflagebereichs, gegebenenfalls in Verbindung mit Verstärkungskanten, -sicken oder -halbsicken, wird die Biegesteifigkeit nochmals vergrößert.

Das trogförmige Profil des Rands kann an den Ecken auslaufen oder geschlossen umlaufen, wobei dann die Ecken verrundet sein können, was eine besonders große Steifigkeit bietet.

Besonderes vorteilhaft ist es, wenn der profilierte Rand oder die Drainagerinne sowohl den tiefsten als auch den höchsten Bereich des Backblechs bildet, so dass das Backblech mit den Funktionsflächen (Oberseite und Unterseite des Auflagebereichs) bei Auflage auf eine ebene Oberfläche nicht aufsetzen kann, wobei sich immer ein sicherer Stand ergibt.

Der Auflagebereich weist zweckmäßigerweise bezogen auf seine Oberseite eine nach oben konvexe Form auf, was bei Bratpfannen als Einzug bezeichnet wird. Bei dieser Formgebung läuft gegebenenfalls aus auf dem Auflagebereich aufliegendem Backgut austretende Flüssigkeit in die Drainagerinne bzw. in das trogförmige Profil und kann dort gesammelt werden, so dass die eigentliche Brat- oder Backfläche trocken bleibt.
Die Formgebung des trogförmigen Profils ist so gewählt, dass das Backblech in übliche Einschübe oder Führungsleisten von Backöfen passt.
Es ist vorteilhaft, wenn die erste Trogwand gegenüber dem Auflagebereich unter einem vorgegebenen Winkel abgewinkelt oder abgekantet ist, insbesondere scharfkantig abgekantet.
Weiterhin ist es vorteilhaft, wenn die zweite Tragwand gegenüber der ersten Trogwand unter einem vorgegebenen Winkel abgewinkelt oder abgekantet, insbesondere scharfkantig abgekantet ist. Zwischen den beiden Trogwänden kann ein ebener Trogboden angeordnet sein, der gegenüber den Trogwänden abgekantet und bevorzugt scharfkantig abgekantet sein kann.
Die erste und die zweite Trogwand kann gegenüber dem Trogboden unter gleichen Winkeln abgekantet sein. Insbesondere kann der Trogboden horizontal sein.
Der Rand ist bevorzugt so profiliert, dass das Backblech stapelbar ist.

Es ergibt sich die zusätzliche Möglichkeit, ein zweites angepasstes Blech als Grillblech auszuführen, indem der Auflagebereich durch Ausschnitte unterbrochen ist, wobei der als Grillfläche dienende Auflagebereich gewellt ausgebildet sein kann. Austretende Flüssigkeit kann dann in/auf einem darunter angeordneten Backblech gesammelt werden. Ein Vorteil gegenüber bekannten Formen besteht darin, dass bei dieser Ausführung das Backblech und das Grillblech eine sicher miteinander verbundene Einheit bilden und in einem Ofen in einen Einschub passen, so dass die Effizienz gesteigert wird.
Das Backblech kann auch in umgedrehter Anordnung benutzt werden, wobei es auch in dieser Lage aufgrund des trogförmigen Randprofils einen stabilen Stand auf einer ebenen Grundfläche aufweist. In dieser Lage ist der Auflagebereich von oben betrachtet nicht konvex, sondern konkav, wodurch sich die Möglichkeit ergibt, Speisen zuzubereiten, die nicht trocken liegen sollen, sondern z.B. in Flüssigkeit schwimmen oder liegen sollen. Dies ist bei herkömmlichen Behältern mit Kastenformat auch so, wobei im Gegensatz zu solchen Behältern der Auflagebereich bei einem erfindungsgemäßen Backblech aber konkav gestaltet sein kann, was die Standsicherheit eines herkömmlichen Behälters beeinträchtigen würde, wenn nicht der Rand erfindungsgemäß gestaltet wäre.
Das vorstehend erwähnte Grillblech kann vorteilhaft auf ein Backblech in der "umgedrehten" Lage aufgelegt werden, weil das Aufnahmevermögen für Flüssigkeit in dem Backblech so größer ist und die Funktion verbessern kann.
Eine vorteilhafte Weiterentwicklung des Backblechs als Grillblech liegt somit darin, dass der Auflagebereich als Grillbereich mit Aussparungen versehen ist und gegebenenfalls gewellt ist. Ein Aspekt der Erfindung liegt in einer Kombination eines Backblechs mit einem Grillblech, jeweils nach der Erfindung.

Zweckmäßigerweise ist das Backblech mit einer Antihaftbeschichtung versehen, wobei auch ein Korrosionsschutz von Vorteil sein kann, wenn preisgünstige Stahlsorten eingesetzt werden sollen, z.B. aluminierter Kohlenstoffstahl oder Chromstahl.

Besonders geeignet sind Beschichtungen mit ausreichender Temperaturbeständigkeit wie beispielsweise aus Hochleistungskunststoffen wie PEK, PEEK und PEKEKK (jeweils Polyaryletherketone bzw. PAEK, PEKK usw., temperaturbeständige Polymere, Harze und Thermoplaste, auch Fluorpolymere). Ferner geeignet sind sogenannte Nanobeschichtungen auf silikatischer Basis, die eine Temperaturbeständigkeit bis 450°C aufweisen. Ferner sind keramische Beschichtungen und Beschichtungen auf temperaturbeständigen Harzen geeignet, z.B. Silikonharz. Bei Verwendung von Edelstahl kann auf eine Beschichtung verzichtet werden.

Das Backblech kann auf beiden Seiten beschichtet sein, wobei die Schichtdicke je nach Ausführung zwischen 1 µm und 100 µm betragen kann.

Die Erfindung wird nachfolgend anhand verschiedener Ausführungsbeispiele unter Bezugnahme auf eine Zeichnung erläutert, wobei
Fig. 1 eine perspektivische Ansicht auf ein erfindungsgemäßes Backblech von oben zeigt,
Fig. 2 eine Draufsicht auf das Backblech nach Fig. 1 von oben zeigt,
Fig. 3 eine Schnittansicht entlang den Linien III - III in Fig. 2 zeigt,
Fig. 4 eine vergrößerte Ausschnittsdarstellung aus Fig. 3 zeigt,
Fig. 5 eine perspektivische Ansicht des Backblechs nach Fig. 1 bis 4 von unten zeigt,
Fig. 6 eine Draufsicht auf das Backblech von unten zeigt,
Fig. 7 eine Schnittansicht entlang den Linien VII - VII in Fig. 6 zeigt,
Fig. 8 eine vergrößerte Ausschnittsdarstellung aus Fig. 7 zeigt,
Fig. 9a - d entsprechende Ansichten wie Fig. 5 bis 8 von einem Grillblech zeigen, und
Fig. 10a - d unterschiedliche Varianten von Randprofilen eines Backblechs mit beispielhaften Maßangaben zeigen.

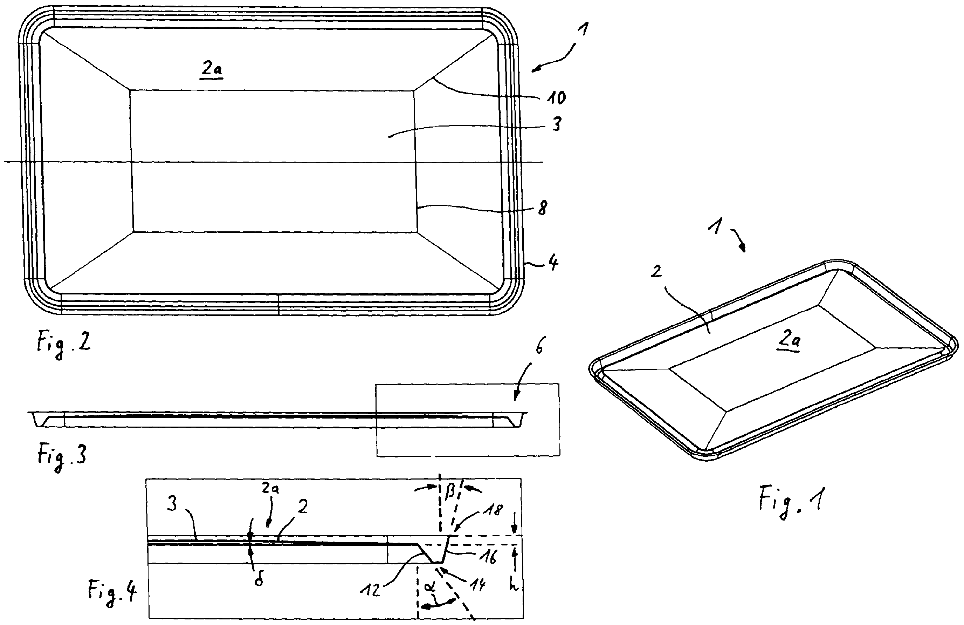

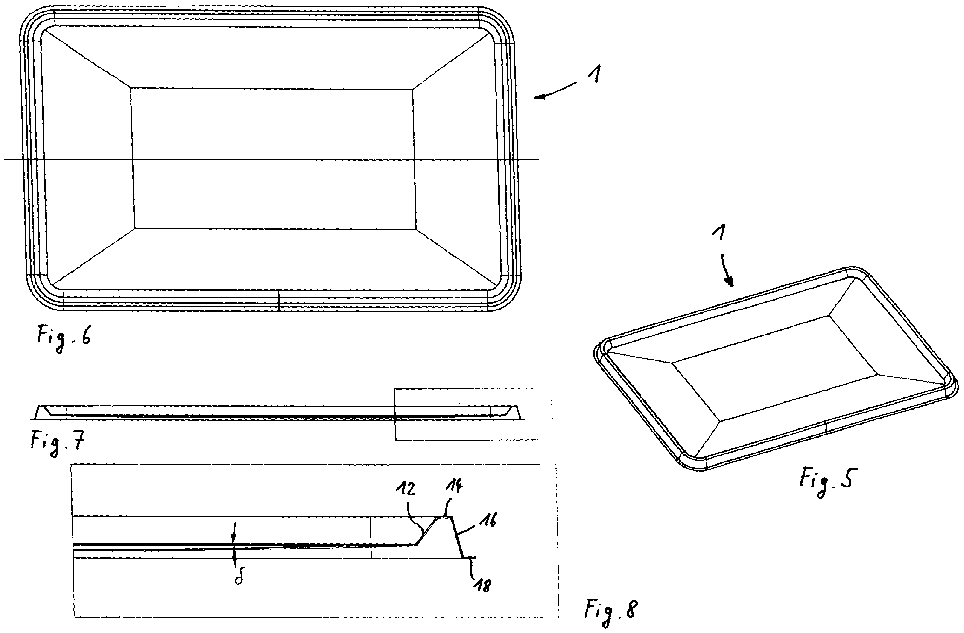

Fig. 1 bis 8 zeigen eine Ausführungsform eines erfindungsgemäßen Backblechs 1, und zwar von oben (Fig. 1 bis 4) und unten (Fig. 5 bis 8). Das im Wesentlichen rechteckförmige Backblech weist einen Auflagebereich 2 und einen diesen allseitig umschließenden Rand 4 auf, der entlang der vier Seiten des Backblechs geradlinig und in den Ecken viertelkreisförmig abgerundet ausgebildet ist. Der Rand 4 weist ein in Bezug auf eine Oberseite 2a des Auflagebereichs 2 nach unten verlaufendes trogförmiges Profil 6 auf.

Der im Wesentlichen rechteckige Auflagebereich 2 ist durch vier insgesamt rechteckig angeordnete Verstärkungssicken oder -halbsicken 8 sowie durch vier diagonal in die Ecken des Backblechs verlaufende weitere Verstärkungssicken oder -halbsicken 10 gegen unerwünschte Durchbiegungen verstärkt.

Das trogförmige Profil 6 weist eine erste, unmittelbar an den Auflagebereich 2 anschließende, bezüglich der Oberseite 2a nach unten verlaufende Trogwand 12, einen Trogboden 14 und eine der ersten Tragwand 12 gegenüberliegende, nach oben verlaufende zweite Trogwand 16 auf. Die zweite Trogwand 16 verläuft bis in eine Höhe h oberhalb des Auflagebereichs 2 in dessen Randbereich, und endet in einem nach außen abgewinkelten Randabschnitt 18, der im Wesentlichen horizontal oder in einer Ebene parallel zu dem Auflagebereich 2 verläuft.
Die erste Trogwand 12 steht unter einem Winkel α von ca. 40° zur Vertikalen, wobei dieser Winkel mindestens 10° betragen sollte. Die zweite Trogwand 16 steht unter einem Winkel *β* von ca. 20° zur Vertikalen, wobei auch dieser Winkel mindestens 10° betragen sollte. Der Trogboden 14 ist in dem dargestellten Beispiel eben und verläuft horizontal. Der Auflagebereich 2 ist bezüglich der Oberseite 2a leicht nach oben konvex ausgebildet, so dass Flüssigkeiten, die sich gegebenenfalls bei Verwendung des Backblechs auf der Oberseite 2a des Auflagebereichs 2 bilden, in das trogförmige Profil 6 ablaufen können. Der Winkel *δ*, um den der Auflagebereich 2 ausgehend vom Randbereich bezüglich einer horizontalen Ebene ansteigt, beträgt ca. 1,3° und kann zwischen 0 und etwa 3° liegen. Als Folge der Konvexität befindet sich der Auflagebereich 2 in einem rechteckigen, ebenen, mittleren, von den vier Verstärkungssicken 8 begrenzten Bereich 3 um einige Millimeter oberhalb des Randbereichs, in dem dargestellten Ausführungsbeispiel um ca. 2 mm höher.
Der Randabschnitt 18 befindet sich trotz der Konvexität des Auflagebereichs 2 noch oberhalb des höchsten, mittleren Bereichs des Auflagebereichs 2, und zwar in dem dargestellten Ausführungsbeispiel um ca. 2,5 mm höher. Mit dem dargestellten trogförmigen Profil ist sichergestellt, dass das Backblech sowohl in der in Fig. 1, 3 und 4 gezeigten Orientierung, in der die Oberseite 2a nach oben weist, als auch in der umgekehrten Orientierung, in der die Oberseite 2a nach unten weist (Fig. 5, 7 und 8), beim Aufsetzen auf eine ebene Unterlage einen stabilen Stand besitzt, da es entweder auf dem trogförmigen Profil (bzw. dem Trogboden 14) oder auf dem Randabschnitt 18 aufliegt. Dabei hat der Auflagebereich 2 stets einen Abstand von der ebenen Unterlage und ist vor Verschleiß oder Verschmutzung geschützt.

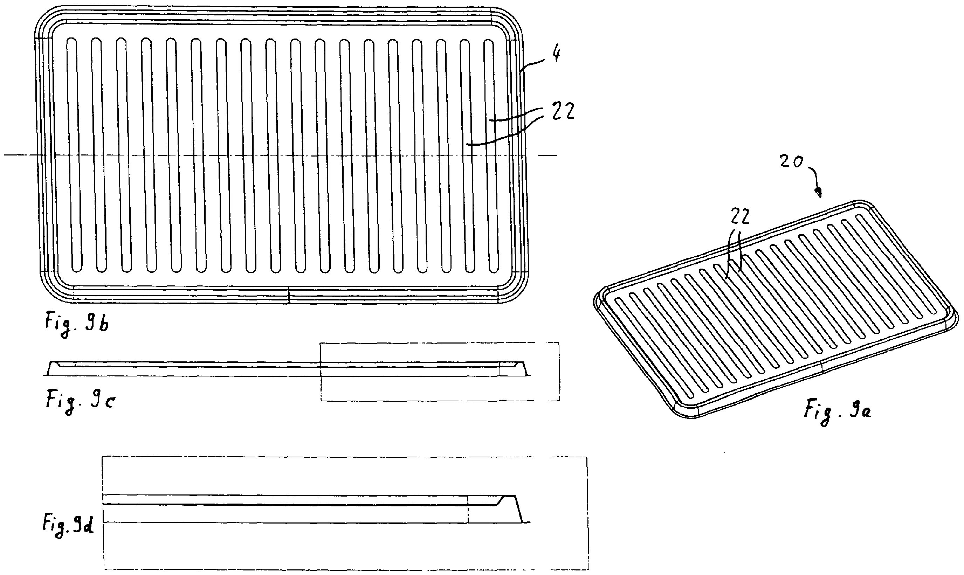

Fig. 9a - d zeigen ein Grillblech in Ansichten, die den Ansichten nach Fig. 5 bis 8 entsprechen, mit dem Unterschied, dass das Grillblech 20 nicht einen geschlossenen Auflagebereich 2 aufweist wie das Backblech, sondern mit Aussparungen versehen ist, die hierbei als längliche Schlitze 22 ausgebildet sind, so dass eine grillartige Oberfläche entsteht. Das Grillblech 20 ist ebenso wie das in Fig. 1 bis 8 dargestellte Backblech stapelbar, sowohl auf anderen Grillblechen als auch auf einem Backblech, so dass sich insbesondere eine Anwendbarkeit in Kombination mit einem Backblech anbietet, wobei das Grillblech entweder mit seiner Oberseite nach unten weisend (in der in Fig. 9a gezeigten Orientierung) von oben auf ein Backblech in umgekehrter Orientierung (Fig. 5) aufgesetzt wird, oder umgekehrt, in dem ein Grillblech mit nach oben weisender Oberseite (gegenüber Fig. 9a um 180° gedreht) auf ein Backblech in der Orientierung nach Fig. 1 (Oberseite weist nach oben) aufgesetzt wird.

Der Auflagebereich des Grillblechs 20 ist vorzugsweise eben, wie Fig. 9c, d zeigen, kann allerdings eine gewellte Form aufweisen, im Unterschied zu der als Ganzes konvexen Formgebung eines Backblechs (Fig. 2, 3).

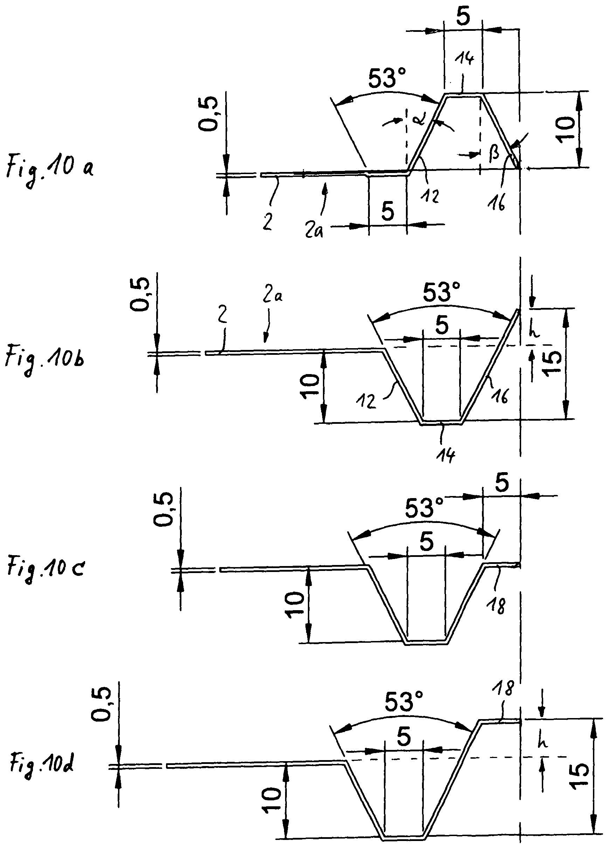

Fig. 10a bis d erläutern unterschiedliche Varianten des trogförmigen Profils 6 mit beispielhaften Maßangaben. In einer einfachsten Ausführungsform gemäß Fig. 10a endet die zweite Trogwand 16 in Höhe des Auflagebereichs 2. In einer bevorzugten Variante gemäß Fig. 10b verläuft die zweite Trogwand 16 bis in eine Höhe h oberhalb des Auflagebereichs 2 in dessen Randbereich. In beiden Fällen sind abgekantete Randabschnitte 18 wie bei der Ausführungsform nach Fig. 1 bis 8 möglich (Fig. 10c, 10d). Des Weiteren besteht in allen Ausführungsformen und Varianten die Möglichkeit, die zweite Trogwand 16 oder, soweit vorhanden, den Randabschnitt 18 mit einer Umbördelung zu versehen, um das Backblech griff- bzw. handhabungsfreundlicher zu gestalten.

### Bezugszeichenliste

- 1: Backblech
- 2: Auflagebereich
- 2a: Oberseite
- 3: mittlerer Bereich von 2
- 4: Rand
- 6: Profil
- 8, 10: Verstärkungssicke (Verstärkungshalbsicke)
- 12: erste Trogwand
- 14: Trogboden
- 16: zweite Trogwand
- 18: Randabschnitt
- 20: Grillblech
- 22: Schlitz (Aussparung)

- h: Höhe von 16 über 2
- *α*: Winkel von 12 zur Vertikalen
- *β*: Winkel von 16 zur Vertikalen
- *δ*: Winkel von 2 zur Horizontalen

## Patentansprüche

1. Backblech mit einem Auflagebereich (2) und einem diesen allseitig umschließenden Rand (4), der ein in Bezug auf eine Oberseite (2a) des Auflagebereiches (2) nach unten verlaufendes trogförmiges Profil (6) aufweist, mit einer ersten, unmittelbar an den Auflagebereich (2) anschließenden, nach unten verlaufenden Trogwand (12), einem Trogboden (14) und einer der ersten Trogwand (12) gegenüberliegenden, nach oben verlaufenden zweiten Trogwand (16), **dadurch gekennzeichnet, dass** der Auflagebereich (2) in Bezug auf die Oberseite (2a) nach oben konvex und nach unten konkav ist.

2. Backblech nach Anspruch 1, **dadurch gekennzeichnet, dass** die zweite Trogwand (16) mindestens bis in Höhe des Auflagebereichs (2) verläuft.

3. Backblech nach Anspruch 1 oder 2, **dadurch gekennzeichnet, dass** die zweite Trogwand (16) in einer vorgegebenen Höhe (h) oberhalb des Auflagebereichs (2) endet.

4. Backblech nach einem der vorangehenden Ansprüche, **dadurch gekennzeichnet, dass** die zweite Trogwand (16) in einen abgewinkelten Randabschnitt (18) übergeht.

5. Backblech nach einem der vorangehenden Ansprüche, **dadurch gekennzeichnet, dass** die zweite Trogwand (16) und/oder der Randabschnitt (18) mit einer endseitigen Umbördelung versehen ist.

6. Backblech nach einem der vorangehenden Ansprüche, **dadurch gekennzeichnet, dass** die erste Trogwand (12) gegenüber dem Auflagebereich (2) unter einem vorgegebenen Winkel, insbesondere scharfkantig, abgekantet ist.

7. Backblech nach einem der vorangehenden Ansprüche, **dadurch gekennzeichnet, dass** die zweite Trogwand (16) gegenüber der ersten Trogwand (12) einen vorgegebenen Winkel aufweist.

8. Backblech nach einem der vorangehenden Ansprüche, **dadurch gekennzeichnet, dass** zwischen der ersten Trogwand (12) und der zweiten Trogwand (16) ein ebener Trogboden (14) angeordnet ist, der gegenüber den Trogwänden (12, 16) abgekantet, insbesondere scharfkantig abgekantet ist.

9. Backblech nach einem der vorangehenden Ansprüche, **dadurch gekennzeichnet, dass** der Rand (4) so profiliert ist, dass das Backblech stapelbar ist.

10. Backblech nach einem der vorangehenden Ansprüche, **dadurch gekennzeichnet, dass** der Auflagebereich (2) als Grillbereich mit Aussparungen (22) versehen ist.

## Claims

1. Baking tray with a supporting area (2) and an enclosing rim (4) running all round it, this rim having a trough-shaped profile (6) extending downwards in relation to an upper surface (2a) of the supporting area (2), with a first trough wall (12) directly adjoining the supporting area (2) and extending downwards, a trough base (14), and a second trough wall (16) lying opposite the first trough wall (12) and extending upwards,
**characterised in that** in relation to the upper surface (2a), the supporting area (2) is upwardly convex and downwardly concave.

2. Baking tray according to claim 1, **characterised in that** the second trough wall (16) extends at least up to the height of the supporting area (2).

3. Baking tray according to claim 1 or 2, **characterised in that** the second trough wall (16) ends at a predetermined height (h) above the supporting area (2).

4. Baking tray according to one of the preceding claims, **characterised in that** the second trough wall (16) transitions into an angled rim section (18).

5. Baking tray according to one of the preceding claims, **characterised in that** the second trough wall (16) and/or the rim section (18) is equipped with end beading.

6. Baking tray according to one of the preceding claims, **characterised in that** the first trough wall (12) is angled at a predetermined angle, in particular sharp-edged, in relation to the supporting area (2).

7. Baking tray according to one of the preceding claims, **characterised in that** the second trough wall (16) has a predetermined angle in relation to the first trough wall (12).

8. Baking tray according to one of the preceding claims, **characterised in that** arranged between the first trough wall (12) and the second trough wall (16) is a flat trough base (14) which is angled, in particular sharp-edged, in relation to the trough walls (12, 16).

9. Baking tray according to one of the preceding claims, **characterised in that** the rim (4) has a profile such that the baking tray can be stacked.

10. Baking tray according to one of the preceding claims, **characterised in that** the supporting area (2) is equipped with recesses (22) to form a grill area.

## Revendications

1. Plaque de four comportant une zone de support (2) et un bord de pourtour (4) se prolongeant tout autour de celle-ci, ce bord ayant un profil en forme d'auge (6) s'étendant vers le bas par rapport à une surface supérieure (2a) de la zone de support (2), une première paroi d'auge (12) se trouvant directement contiguë par rapport à la zone de support (2) et s'étendant vers le bas, une base d'auge (14), et une deuxième paroi d'auge (16) reposant de manière opposée par rapport à la première paroi d'auge (12) et s'étendant vers le haut,
**caractérisée en ce que**, par rapport à la surface supérieure (2a), la zone de support (2) est convexe vers le haut et concave vers le bas.

2. Plaque de four selon la revendication 1, **caractérisée en ce que** la deuxième paroi d'auge (16) s'étend au moins jusqu'à la hauteur de la zone de support (2).

3. Plaque de four selon la revendication 1 ou la revendication 2, **caractérisée en ce que** la deuxième paroi d'auge (16) se termine à une hauteur prédéterminée (h) au-dessus de la zone de support (2).

4. Plaque de four selon l'une des revendications précédentes, **caractérisée en ce que** la deuxième paroi d'auge (16) assure la transition dans une section de bord inclinée (18).

5. Plaque de four selon l'une des revendications précédentes, **caractérisée en ce que** la deuxième paroi d'auge (16) et/ou la section de bord (18) comporte un nervurage d'extrémité.

6. Plaque de four selon l'une des revendications précédentes, **caractérisée en ce que** la première paroi d'auge (12) est inclinée selon un angle prédéterminé, en particulier à bord vif, par rapport à la zone de support (2).

7. Plaque de four selon l'une des revendications précédentes, **caractérisée en ce que** la deuxième paroi d'auge (16) a un angle prédéterminé par rapport à la première paroi d'auge (12).

8. Plaque de four selon l'une des revendications précédentes, **caractérisée en ce que**, agencée entre la première paroi d'auge (12) et la deuxième paroi d'auge (16), se trouve une base d'auge plate (14) qui est inclinée, en particulier à bord vif, par rapport aux parois d'auge (12, 16).

9. Plaque de four selon l'une des revendications précédentes, **caractérisée en ce que** le bord (4) a un profil de telle sorte que la plaque de four peut être empilée.

10. Plaque de four selon l'une des revendications précédentes, **caractérisée en ce que** la zone de support (2) comporte des évidements (22) pour former une zone à griller.
